Europäisches Patentamt

European Patent Office

Office européen des brevets

(11) Publication number: **0 509 478 A1**

# EUROPEAN PATENT APPLICATION

(21) Application number: **92106522.3**

(22) Date of filing: **15.04.92**

(51) Int. Cl.5: **B62B 3/10**, B65F 1/14

(30) Priority: **15.04.91 US 684998**

(43) Date of publication of application:
**21.10.92 Bulletin 92/43**

(84) Designated Contracting States:
**DE ES FR GB IT NL**

(71) Applicant: **Johan, Tom**
**9921 Carmel Mountain Road 116**
**San Diego, California(US)**
Applicant: **Johan, Robert**
**4644 Blue Jay Street**
**Orange, California(US)**

(72) Inventor: **Johan, Tom**
**9921 Carmel Mountain Road 116**
**San Diego, California(US)**
Inventor: **Johan, Robert**
**4644 Blue Jay Street**
**Orange, California(US)**

(74) Representative: **Baillie, Iain Cameron et al**
**c/o Ladas & Parry, Altheimer Eck 2**
**W-8000 München 2(DE)**

(54) **Hamper for disposable waste bag.**

(57) A hamper constructed to have an upper rim over which a disposable waste bag may be suspended in an open condition, and a hinged frame (16) which serves to clamp the upper end of the bag to the rim. The bag may then be conveniently loaded. A hinged lid (26) is also provided for closing the hamper when not in use. The rim is supported on upright posts (14a,14b) which, in turn, are mounted on a base (10) supported on casters (12).

FIG.1

EP 0 509 478 A1

BACKGROUND OF THE INVENTION

The invention provides an improved hamper which is supported on casters, and which finds particular utility in hospitals for removably supporting plastic bags for the disposal of medical waste products.

SUMMARY OF THE INVENTION

According to one aspect of the invention, there is provided a hamper assembly for supporting waste bags and the like comprising: a base; a frame mounted on the base defining at least one upright post and a pair of spaced and parallel arms at the upper ends of the post disposable in an upper plane which is spaced and parallel to the plane of the base, the arms being adapted to receive the upper end of an open-topped waste bag with the upper edge of the bag folded over the arms; a frame member hinged to the frame adjacent to the spaced and parallel arms and turnable from an open position to a closed position to clamp the upper edge of the waste bag to the arms; and a lid hinged to the frame member.

The hamper of the invention may be constructed to have a frame which defines an upper rim over which a disposable plastic bag may be suspended with its top in an open position for receiving medical waste. The hamper may also include a hinged frame which serves to clamp the upper end of the bag to the rim. The bag may then be conveniently loaded with medical waste through its open top. A hinged lid may also be provided for closing the hamper when not in use. The upper rim may be supported on upright posts which are mounted on a base, which, in turn, is mounted on casters. The upper rim preferably is discontinuous to define an opening through which the bag may be removed when the hinged frame is turned upwardly to release the bag.

BRIEF DESCRIPTION OF THE DRAWINGS

FIGURE 1 is a perspective view showing the hamper of the invention in one of its embodiments, taken from the front and from one side; and
FIGURE 2 is a perspective view of the hamper of FIGURE 1 taken from the rear and one side; and
FIGURE 3 is a fragmentary perspective fragmentary representation of a disposable waste bag supported in the hamper of FIGURES 1 and 2.

DETAILED DESCRIPTION OF THE ILLUSTRATED EMBODIMENT

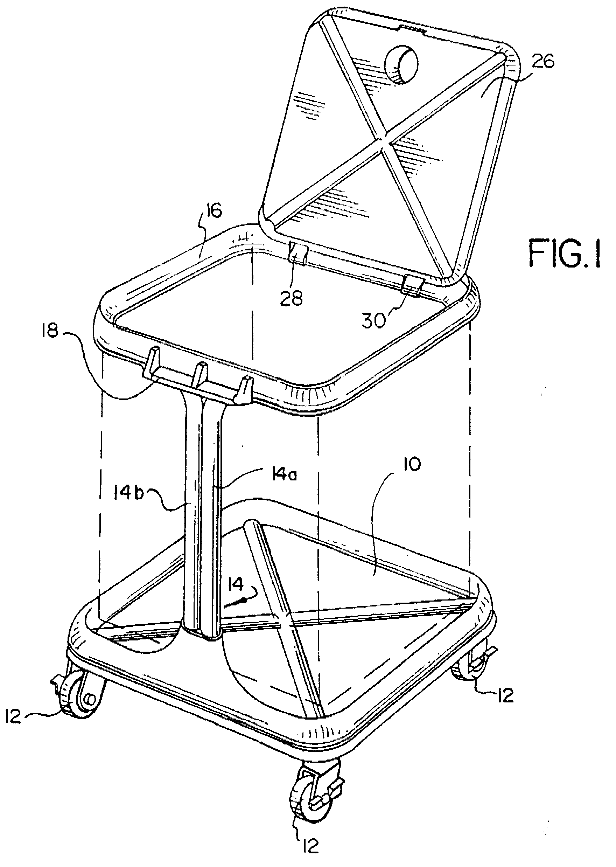

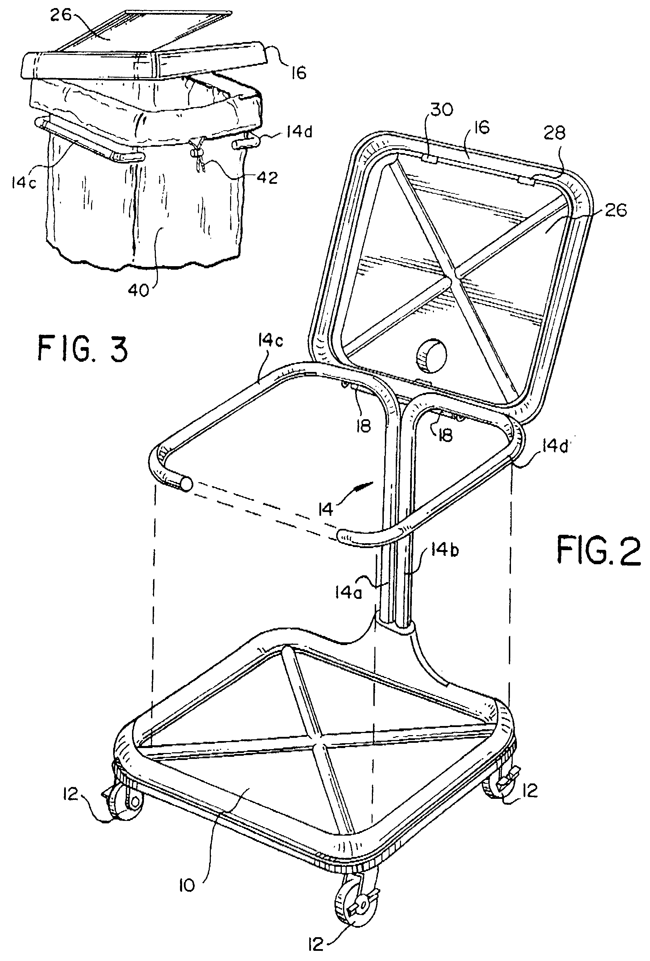

The hamper shown in FIGURES 1 & 2 includes a base 10 which is supported on casters 12, the casters being swivably mounted on the four corners the base. At least some of the casters may be of the locking type, if so desired. A wire-formed frame 14 is mounted on the base 10, the frame defining a pair of upright posts 14a, 14b and a discontinuous upper rim formed of a pair of upper side members 14c and 14d.

The upper side members 14c and 14d, as shown in FIGURE 2 form a discontinuous upper rim having an opening at the forward end of the hamper to permit a waste bag 40 (FIGURE 3) to be inserted and removed. A lid frame 16 is hinged to the upper rim of frame 14 by a hinge 18.

As best shown in FIGURE 2, the hinge 18 is constructed so that when the frame 16 is turned up and away from the upper rim formed by the sections 14c, 14d of frame 14, the frame 16 is displaced up from the upper rim of frame 14 to permit the bag to be suspended from the upper rim of frame 14 without interference from the frame 16. After the bag 40 has been suspended, the frame 16 may then be clamped down over the upper rim of frame 14, as shown in FIGURE 1.

The hamper also includes a lid 26 which is hinged to the frame 16 by hinges 28 and 30. Hinges 28 and 30 may be positioned on the opposite side of the frame 16 from hinge 18, as shown so that the lid may be opened and closed without any tendency to turn the frame 16 on its hinge 18. Alternately, hinges 28 & 30 may be positioned on the same side of frame 16 as hinge 18.

To insert the disposable waste bag 40 into the hamper, the lid 26 and frame 16 are turned up to the position shown in FIGURE 2. The bag is then inserted into the hamper through the opening in the front of the upper rim formed by components 14c, 14d. The upper edge of the bag is then folded down over the upper rim as shown in FIGURE 3, and held in place by a drawstring 42. The frame 16 is then turned down over the upper edge of the bag clamping the bag in place. Medical waste may then be inserted into the bag through the open top. When the hamper is not in use, lid 26 is turned down to enclose the top of the hamper.

The hamper may be easily moved from position to position on its casters 12. When the disposable bag is full, it may be removed by turning the lid 26 and frame 16 up to the position shown in FIGURE 2. Then, the bag may be released and removed through the open front of the upper rim formed by components 14c, 14d.

The invention provides, therefore, a rigid and sturdy hamper for supporting disposable bags, particularly for medical waste, although the hamper is not limited to such an application. The hamper is rigid and sturdy in its construction, and it is simple and relatively inexpensive to manufacture. In addition, the hamper is easy to use, in that the disposable bags may be inserted into and removed from the hamper with a minimum of operations.

It will be appreciated that while a particular embodiment of the invention has been shown and described, modifications may be made. It is intended in the Claims to cover all modifications which come within the true spirit and scope of the invention.

## Claims

1. A hamper assembly for supporting waste bags and the like comprising: a base; a frame mounted on said base defining at least one upright post and a pair of spaced and parallel arms at the upper ends of said post disposable in an upper plane which is spaced and parallel to the plane of said base, said arms being adapted to receive the upper end of an open-topped waste bag with the upper edge of the bag folded over the arms; a frame member hinged to said frame adjacent to said spaced and parallel arms and turnable from an open position to a closed position to clamp the upper edge of the waste bag to the arms; and a lid hinged to said frame member.

2. The hamper assembly defined in Claim 1, in which said base has a rectangular shape, and in which said arms have a rectangular configuration.

3. The hamper assembly defined in Claim 2, in which said arms define an open space in the front of the hamper to permit a bag to be inserted into and removed from the hamper.

4. The hamper assembly defined in Claim 1, in which said base has a flat rectangular configuration.

5. The hamper assembly defined in Claim 4, and which includes swivel casters mounted at each corner of the base and extending downwardly from the plane of said base.

EP 0 509 478 A1

FIG.1

26

16

14d

14c

42

40

FIG. 3

30

16

28

26

14c

18

18

14d

14

14b

14a

12

12

12

10

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-9 002 054 (GIELSDORF) | 1,2 | B62B3/10 |
| Y | * page 9, last paragraph - page 10, paragraph 1; figures 1-3 * | 3-5 | B65F1/14 |
| | --- | | |
| Y | EP-A-0 038 872 (FLOORDRESS REINIGUNGSGERÄTE GMBH) <br> * figure 1 * | 3-5 | |
| | --- | | |
| A | FR-A-2 614 255 (ATELIERS REUNIS CADDIE) <br> * abstract; figures 1,2 * | 1 | |
| | ----- | | |

TECHNICAL FIELDS
SEARCHED (Int. Cl.5)

B62B
B65F
B65B

The present search report has been drawn up for all claims

| Place of search | Date of completion of the search | Examiner |
|---|---|---|
| THE HAGUE | 07 JULY 1992 | MARTINEZ NAVAR |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)